(19) Europäisches Patentamt
European Patent Office
Office européen des brevets

(11) **EP 4 254 546 A1**

(12) **EUROPEAN PATENT APPLICATION**

(43) Date of publication:
**04.10.2023 Bulletin 2023/40**

(21) Application number: **23165834.5**

(22) Date of filing: **31.03.2023**

(51) International Patent Classification (IPC):
*H01M 4/131* (2010.01)   *H01M 4/62* (2006.01)
*H01M 10/052* (2010.01)   *H01M 10/42* (2006.01)
*H01M 10/613* (2014.01)   *H01M 10/654* (2014.01)
*H01M 10/659* (2014.01)

(52) Cooperative Patent Classification (CPC):
**H01M 4/131; H01M 4/62; H01M 10/052;
H01M 10/4235; H01M 10/613; H01M 10/654;
H01M 10/659; H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022   JP 2022059554
30.03.2023   KR 20230041914**

(71) Applicant: **Samsung SDI Co., Ltd.
Yongin-si, Gyeonggi-do 17084 (KR)**

(72) Inventors:
• **BAEK, Jinseok
Yokohama-shi (JP)**
• **FUKATANI, Tomoyuki
Yokohama-shi (JP)**

(74) Representative: **Marks & Clerk LLP
15 Fetter Lane
London EC4A 1BW (GB)**

(54) **COMPOSITE PARTICLES FOR NON-AQUEOUS ELECTROLYTE RECHARGEABLE BATTERY, PRODUCING METHOD, POSITIVE AND NEGATIVE ELECTRODES, AND NON-AQUEOUS ELECTROLYTE RECHARGEABLE BATTERY**

(57)   The composite particles are composite particles including metal hydroxide particles and conductive particles,
wherein a volume resistivity at the time of about 60 MPa pressurization is greater than or equal to about 0.10 $\Omega$cm and less than or equal to about $4 \times 10^4$ $\Omega$cm,
an endothermic amount between about 50 °C to about 250 °C in differential scanning calorimetry is greater than or equal to about 150 J/g and less than or equal to about 500 J/g, and
an amount of desorbed $P_2$ (MS1) from about 80 °C to about 1400 °C by thermal desorption gas mass spectrometry (TOS-MS) is greater than or equal to about $300 \times 10^{-6}$ mol/g and less than or equal to about $3000 \times 10^{-6}$ mol/g.

FIG. 2

Metal hydroxide particles

Conductive particles

EP 4 254 546 A1

Processed by Luminess, 75001 PARIS (FR)

Description

## BACKGROUND OF THE INVENTION

### (a) Field of the Invention

The present disclosure relates to composite particles for a non-aqueous electrolyte rechargeable battery, a method of producing the same, positive and negative electrodes, and a non-aqueous electrolyte rechargeable battery.

### (b) Description of the Related Art

Non-aqueous electrolyte rechargeable batteries including rechargeable lithium ion batteries are widely used as power sources for smart phones, notebook computers, and the like, and recently are also used for large-sized batteries such as those for vehicles.

On the other hand, the rechargeable lithium ion batteries have advantages of high energy density, but since they use non-aqueous electrolytes, sufficient measures are required for safety. However, with the recent increase in the size of batteries, securing safety has become more important.

For example, when a rechargeable lithium ion battery is placed in a high-temperature environment, there is a possibility that the positive electrode of the rechargeable lithium ion battery generates heat and the internal temperature of the battery rises. When the internal temperature becomes high, a short circuit due to shrinkage of the separator included in the rechargeable lithium ion battery is likely to occur. As a result, there is a possibility that the internal temperature may further rise.

Therefore, in order to ensure the safety of the rechargeable lithium ion battery, it has been proposed to include inorganic particles composed of metal hydroxide particles having heat-absorption properties as endothermic particles in the rechargeable lithium ion battery to suppress an increase in internal temperature.

For example, Patent Document 1 discloses that inorganic particles composed of endothermic and basic calcium silicate having a specific surface area ratio by adsorption of water vapor and nitrogen gas of greater than or equal to about 0.45 and less than or equal to about 2.0 are included in a separator as endothermic particles to improve battery safety.

In addition, Patent Documents 2 and 3, respectively, disclose that aluminium hydroxide particles having a maximum endothermic peak temperature in a differential scanning calorimetry method (DSC) of greater than or equal to about 270 °C and less than or equal to about 360 °C, and a dehydration reaction temperature range of greater than or equal to about 200 °C and less than or equal to about 400 °C are included in an electrolyte or separator.

[Prior Art Documents]

[Patent Documents]

(Patent Document 1) Japanese Patent No. 6925368
(Patent Document 2) Japanese Unexamined Patent Publication No. 2016-162528
(Patent Document 3) Japanese Patent No. 4364940

## SUMMARY OF THE INVENTION

However, according to the study of the present inventors, it is known that there are cases where the internal temperature of the non-aqueous electrolyte rechargeable battery cannot be sufficiently suppressed by the inorganic particles described in Patent Document 1.

Also, in the temperature ranges described in Patent Documents 2 and 3, melting of the separator included in the non-aqueous electrolyte rechargeable battery and decomposition of the charged positive electrode occur.

In addition, when inorganic particles described in Patent Documents 1 to 3 are included in the positive electrode or negative electrode of a non-aqueous electrolyte rechargeable battery, a volume resistivity of these inorganic particles is large, and thus electrical resistance of the non-aqueous electrolyte rechargeable battery as a whole may increase.

The present invention has been made in view of the above-described problems, and provides composite particles capable of suppressing an increase in the internal temperature of a non-aqueous electrolyte rechargeable battery even under an environment in which the internal temperature is likely to increase due to battery abnormalities such as internal short circuits and capable of suppressing the electrical resistance of a non-aqueous electrolyte rechargeable battery to a low level.

That is, the composite particles for a non-aqueous electrolyte rechargeable battery according to the present invention are composite particles including metal hydroxide particles and conductive particles,

wherein a volume resistivity at the time of about 60 MPa pressurization is greater than or equal to about 0.10 $\Omega$cm and less than or equal to about $4 \times 10^4$ $\Omega$cm,
an endothermic amount between about 50 °C to about 250 °C in differential scanning calorimetry is greater than or equal to about 150 J/g and less than or equal to about 500 J/g, and
an amount of desorbed $P_2$ (MS1) from about 80 °C to about 1400 °C by thermal desorption gas mass spectrometry (TDS-MS) is greater than or equal to about $300 \times 10^{-6}$ mol/g and less than or equal to about $3000 \times 10^{-6}$ mol/g.

According to the composite particles for the non-aqueous electrolyte rechargeable battery configured as described above, since a degree of modification by phosphonic acid, which is defined by a desorbed amount of $P_2$ gas, is set within an appropriate range, an increase in the internal temperature of non-aqueous electrolyte rechargeable battery including the composite particle can be suppressed sufficiently.

In addition, since the volume resistivity of the composite particles at the time of about 60 MPa pressurization is greater than or equal to about 0.10 $\Omega$cm and less than or equal to about $4 \times 10^4$ $\Omega$cm, even when these composite particles are included in the positive electrode and/or the negative electrode, electrical resistance of the non-aqueous electrolyte rechargeable battery can be reduced to a low level.

The amount of desorbed $H_2O$ (MS2) of the composite particles from about 80 °C to about 200 °C as determined by a thermal desorption gas mass spectrometry (TDS-MS) may be greater than or equal to about $30 \times 10^{-6}$ mol/g and less than or equal to about $1500 \times 10^{-6}$ mol/g, and a desorption gas amount ratio (MS1/MS2) may satisfy Formula (1).

$$0.5 \leq (MS1 / MS2) \leq 5.0 \qquad (1)$$

A ratio ($A_D / A_G$) of a peak area ($A_D$) around 1350 cm$^{-1}$ and a peak area ($A_G$) around 1580 cm$^{-1}$ measured by Raman spectroscopy of the composite particles may be greater than or equal to about 0.5 and less than or equal to about 3.5, and

a peak full width at half maximum (G'-FWHM) around 2680 cm$^{-1}$ measured by Raman spectroscopy may be greater than or equal to about 60 cm$^{-1}$ and less than or equal to about 150 cm$^{-1}$.

A specific surface area (BET1) of the composite particles calculated based on the adsorption isotherm measured by adsorbing water vapor may be greater than or equal to about 8 m$^2$/g and less than or equal to about 600 m$^2$/g, and a specific surface area (BET2) of the composite particles calculated based on the adsorption isotherm measured by adsorbing nitrogen may be greater than or equal to about 8 m$^2$/g and less than or equal to about 600 m$^2$/g.

A specific surface area ratio (BET1/BET2) may satisfy Formula (2).

$$0.2 \leq (BET1 / BET2) \leq 5.0 \qquad (2)$$

An amount of desorbed $CH_4$ (MS3) of the composite particles from about 80 °C to about 1400 °C by thermal desorption gas mass spectrometry (TDS-MS) may be greater than or equal to about $30 \times 10^{-6}$ mol/g and less than or equal to about $1000 \times 10^{-6}$ mol/g, and

an amount of desorbed CHsOH (MS4) of the composite particles from about 80 °C to about 1400 °C by TDS-MS may be greater than or equal to about $10 \times 10^{-6}$ mol/g and less than or equal to about $3000 \times 10^{-6}$ mol/g.

An amount of desorbed $C_6H_6$ (MS5) of the composite particles from about 80 °C to about 1400 °C by TDS-MS may be greater than or equal to about $1 \times 10^{-6}$ mol/g and less than or equal to about $4000 \times 10^{-6}$ mol/g.

In a specific embodiment, the metal hydroxide may be at least one selected from aluminium hydroxide, pseudo-boehmite, boehmite, alumina, and kaolinite.

A positive electrode or a negative electrode for a non-aqueous electrolyte rechargeable battery containing the above-described composite particles for a non-aqueous electrolyte rechargeable battery in an amount of greater than or equal to about 0.1 wt% and less than or equal to about 5.0 wt%, and a non-aqueous electrolyte rechargeable battery having these positive electrodes or negative electrodes may also be provided.

At least some of the above and other features of the invention are set out in the claims.

According to the composite particles for a non-aqueous electrolyte rechargeable battery according to the present invention, an endothermic amount at about 50 °C to about 250 °C is greater than or equal to about 150 J/g and less than or equal to about 500 J/g, and a degree of modification by phosphonic acid is set to an appropriate range. As a result, an increase in the internal temperature of the non-aqueous electrolyte rechargeable battery including the composite particles may be sufficiently suppressed even under an environment in which the internal temperature tends to increase due to a battery abnormality such as an internal short circuit.

As a result, deterioration of the battery caused by an increase in the internal temperature of the non-aqueous electrolyte rechargeable battery may be suppressed, and cycle life of the non-aqueous electrolyte rechargeable battery may be improved.

In addition, when the volume resistivity of the composite particle is greater than or equal to about 0.10 $\Omega$cm and less than or equal to about $4 \times 10^4$ $\Omega$cm, the composite particles may be used as an endothermic conductive agent having properties as a conductive agent as well as endothermic property.

As a result, the electrical resistance of the non-aqueous electrolyte rechargeable battery may be suppressed to a low level even when the composite particles according to the present invention may be included in the positive electrode or the negative electrode.

## BRIEF DESCRIPTION OF THE DRAWINGS

FIG. 1 is a schematic view illustrating a non-aqueous electrolyte rechargeable battery according to an embodiment.
FIG. 2 is a schematic view showing the structure of a composite particle according to an embodiment.

## DETAILED DESCRIPTION OF THE EMBODIMENTS

Hereinafter, a specific configuration of a non-aqueous electrolyte rechargeable battery according to an embodiment will be described.

<1. Basic Configuration of Non-aqueous Electrolyte Rechargeable Battery>

The non-aqueous electrolyte rechargeable battery according to the present embodiment is a rechargeable lithium ion battery including a positive electrode, a negative electrode, a separator, and a non-aqueous electrolyte.

The shape of the rechargeable lithium ion battery is not particularly limited, but may be, for example, a cylindrical shape, a prismatic shape, a laminated shape, or a button shape.

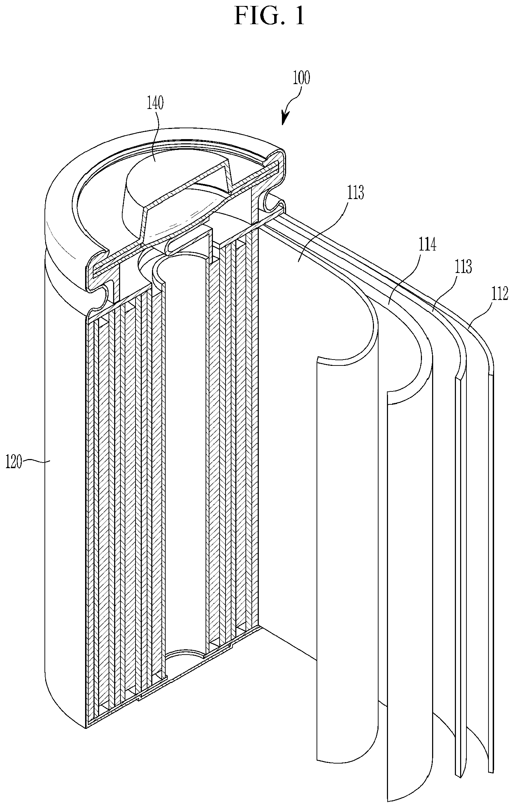

Hereinafter, a non-aqueous electrolyte rechargeable battery according to an embodiment will be described with reference to FIG. 1. FIG. 1 is a schematic view illustrating a non-aqueous electrolyte rechargeable battery according to an embodiment. Referring to FIG. 1, a rechargeable lithium battery 100 according to an embodiment of the present invention includes a battery cell including a positive electrode 114, a negative electrode 112 facing the positive electrode 114, a separator 113 between the positive electrode 114 and the negative electrode 112, and an electrolyte (not shown) for a rechargeable lithium battery impregnating the positive electrode 114, negative electrode 112, and separator 113, a battery case 120 housing the battery cell, and a sealing member 140 sealing the battery case 120.

(1-1. Positive Electrode)

The positive electrode includes a positive electrode current collector and a positive electrode mixture layer formed on the positive electrode current collector. The positive electrode current collector may be any material as long as it is a conductor, and is, for example, plate-shaped or thin, and may be desirably made of aluminium, stainless steel, nickel coated steel, or the like.

The positive electrode mixture layer may include at least a positive electrode active material, and may further include a conductive agent and a positive electrode binder.

The positive electrode active material may be, for example, a transition metal oxide or a solid solution oxide including lithium, and is not particularly limited as long as it can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In addition, Li·Co composite oxides such as $LiCoO_2$ and Li·Ni·Co-Mn-based composite oxides such as $LiNi_xCo_yMn_zO_2$, Li-Ni-based composite oxide such as $LiNiO_2$, or Li-Mn-based composite oxides such as $LiMn_2O_4$, and the like. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), $LiMn_{1.5}Ni_{0.5}O_4$. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as it is for increasing the conductivity of the positive electrode. Specific examples of the conductive agent may include those including at least one selected from among carbon black, natural graphite, artificial graphite, fibrous carbon, and sheet-like carbon.

Examples of the carbon black may include furnace black, channel black, thermal black, ketjen black, and acetylene black.

Examples of the fibrous carbon may include carbon nanotubes and carbon nanofibers, and examples of the sheet-like carbon include graphene and the like.

A content of the conductive agent in the positive electrode mixture layer is not particularly limited, but may be greater than or equal to about 0.1 wt% and less than or equal to about 5 wt%, or greater than or equal to about 0.5 wt% and less than or equal to about 3 wt% based on the total amount of the positive electrode mixture layer, from the viewpoint of achieving both conductivity and battery capacity.

The positive electrode binder may include, for example, a fluoro-containing resin such as polyvinylidene fluoride, an ethylene-containing resin such as styrene-butadiene rubber, an ethylene-propylene diene terpolymer, an acrylonitrile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, etc.), nitrocellulose, and the like. The positive electrode binder may be any material capable of binding the positive electrode active material and the conductive agent onto the positive electrode current collector, and is not particularly limited.

(1-2. Negative Electrode)

A negative electrode includes a negative current collector and a negative electrode mixture layer formed on the negative current collector.

The negative current collector may be anything as long as it is a conductor, and may be desirably plate-shaped or thin, and made of copper, stainless steel, nickel-plated steel, or the like.

The negative electrode mixture layer may include at least a negative electrode active material, and may further include a conductive agent and a negative electrode binder.

The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), metallic lithium, a titanium oxide compound such as $Li_4Ti_5O_{12}$, lithium nitride, and the like. As the negative electrode active material, one of the above examples may be used, or two or more types may be used in combination. On the other hand, oxides of silicon may be represented by $SiO_x$ ($0 < x \leq 2$).

The conductive agent is not particularly limited as long as it is for increasing the conductivity of the negative electrode, and for example, the same conductive agent as described in the positive electrode section may be used.

A content of the conductive agent in the negative electrode mixture layer is not particularly limited, but may be greater than or equal to about 0.1 wt% and less than or equal to about 5 wt%, or greater than or equal to about 0.5 wt% and less than or equal to about 3 wt% based on the total weight of the negative electrode mixture layer, from the viewpoint of achieving both conductivity and battery capacity.

The negative electrode binder may be one capable of binding the negative electrode active material and the conductive agent on the negative current collector, and is not particularly limited. The negative electrode binder may be, for example, polyvinylidene fluoride (PVDF), polytetrafluoroethylene (PTFE), polyacrylic acid (PAA), a styrene-butadiene-based copolymer (SBR), a metal salt of carboxymethyl cellulose (CMC), etc. The binder may be used alone or may be used in mixture of two or more types.

(1-3. Separator)

The separator is not particularly limited, and any separator may be used as long as it is used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-fluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

The separator may further include a surface layer covering the surface of the porous film or non-woven fabric described above. The surface layer may include an adhesive for immobilizing the battery element by adhering to the electrode. Examples of the adhesive may include a vinylidene fluoride-hexafluoropropylene copolymer, an acid-modified product of vinylidene fluoride polymers, and a styrene-(meth)acrylic acid ester copolymer.

(1-4. Non-aqueous Electrolyte)

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that 1<x<6, n=1 or 2], LiSCN, LiBr, LiI, $Li_2SO_4$, $Li_2B_{10}Cl_{10}$, $NaClO_4$, NaI, NaSCN, NaBr, $KClO_4$, or KSCN, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4$N-maleate, $(C_2H_5)_4$N-benzoate, $(C_2H_5)_4$N-phthalate, stearyl lithium sulfonate, octyl lithium sulfonate, dodecylbenzene lithium sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte containing the above-described lithium compound (electrolyte salt) at a concentration of greater than or equal to about 0.8 mol/L and less than or equal to about 1.5 mol/L.

Meanwhile, various additives may be added to the non-aqueous electrolyte. Examples of such additives may include negative electrode-acting additives, positive electrode-acting additives, ester additives, carbonate ester additives, sulfuric acid ester additives, phosphoric acid ester additives, boric acid ester additives, acid anhydride additives, and electrolyte additives. One of these may be added to the non-aqueous electrolyte, and a plurality of types of additives may be added.

<2. Characteristic Configuration of Non-aqueous Electrolyte Rechargeable Battery According to an Embodiment >

Hereinafter, the characteristic configuration of the non-aqueous electrolyte rechargeable battery according to an embodiment will be described.

The positive electrode mixture layer of the non-aqueous electrolyte rechargeable battery according to the present embodiment may include, in addition to the aforementioned components, composite particles that function as an endothermic conductive agent for a non-aqueous electrolyte rechargeable battery.

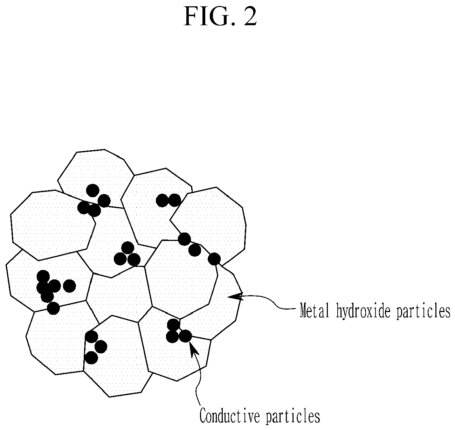

These composite particles are composite particles in which metal hydroxide particles capable of absorbing heat through an endothermic reaction and conductive particles having conductivity are composited. As shown in FIG. 2, the composite particles may be obtained by mixing the metal hydroxide particles and the conductive particles as uniformly as possible. Herein, the composite refers to a state in which a plurality of particles are formed into a single aggregate by chemically bonding with each other through functional groups (for example, carboxyl group and hydroxyl group) possessed by each particle. The chemical bonds herein may include not only covalent bonds as described above, but also various bonds such as ionic bonds, coordinate bonds, and metal bonds. On the other hand, the bonding state between the particles may be confirmed by, for example, X-ray photoelectron spectroscopy or the like.

The metal hydroxide particles are not particularly limited as long as they can cause an endothermic reaction. Specific examples of the metal hydroxide may include aluminium hydroxide, pseudo-boehmite, boehmite, alumina, and kaolinite. These may be used alone or may be used in a combination of two or more types.

An average primary particle diameter of the metal hydroxide particles may be greater than or equal to about 10 nm and less than or equal to about 20 $\mu$m, or greater than or equal to about 50 nm and less than or equal to about 10 $\mu$m.

The conductive particle may have electroconductivity, and it is not specifically limited. Specific examples of the material which includes the conductive particles may include a carbon material, a metal nanoparticle, etc.

Examples of the metal nanoparticles may include gold nanoparticles, silver nanoparticles, and copper nanoparticles.

Examples of the carbon material may include at least one selected from carbon black, natural graphite, artificial graphite, fibrous carbon, and sheet-like carbon.

Examples of the carbon black may include furnace black, channel black, thermal black, ketjen black, and acetylene black.

Examples of the fibrous carbon may include single-walled carbon nanotubes and multi-layer carbon nanotubes, and examples of sheet-like carbon include graphene and the like.

The composite particle contains the above-mentioned conductive particles, and a ratio ($A_D / A_G$) of a peak area ($A_D$) around 1350 $cm^{-1}$ and a peak area ($A_G$) around 1580 $cm^{-1}$ measured by Raman spectroscopy of the composite particles may be greater than or equal to about 0.5 and less than or equal to about 3.5, for example, greater than or equal to about 1.1 and less than or equal to about 1.3, and a peak full width at half maximum (G'-FWHM) around 2680 $cm^{-1}$ measured by Raman spectroscopy may be greater than or equal to about 60 $cm^{-1}$ and less than or equal to about 150 $cm^{-1}$, for example, greater than or equal to about 80 $cm^{-1}$ and less than or equal to about 85 $cm^{-1}$.

An average primary particle diameter or a fiber length of the conductive particle may be greater than or equal to about 1 nm and less than or equal to about 10 $\mu$m, or greater than or equal to about 10 nm and less than or equal to about 1 $\mu$m. In the case of using metal nanoparticles as the conductive particles, any particle diameter may be used as long as the average primary particle diameter is in nanometers, but, for example, the average primary particle diameter may be greater than or equal to about 1 nm and less than or equal to about 500 nm.

A content of the metal hydroxide particles in the composite particles may be in the range of greater than or equal to about 1 wt% and less than or equal to about 60 wt%, greater than or equal to about 5 wt% and less than or equal to about 50 wt%, or greater than or equal to about 10 wt% and less than or equal to about 40 wt% based on the total weight of the composite particles.

A content of the conductive particles in the composite particles may be in the range of greater than or equal to about 0.1 wt% and less than or equal to about 25 wt%, greater than or equal to about 0.5 wt% and less than or equal to about 20 wt%, or greater than or equal to about 1 wt% and less than or equal to about 15 wt% based on the total weight of the composite particles.

The composite particles may have a specific surface area and a degree of modification by various modifiers within the following ranges.

A specific surface area (BET1) calculated based on the adsorption isotherm measured by adsorbing water vapor to the composite particles may be greater than or equal to about 8 $m^2/g$ and less than or equal to about 600 $m^2/g$, and at the same time a specific surface area (BET2) calculated based on the adsorption isotherm measured by adsorbing nitrogen to the composite particles may be greater than or equal to about 8 $m^2/g$ and less than or equal to about 600 $m^2/g$, for example, may be greater than or equal to about 10 $m^2/g$ and less than or equal to about 600 $m^2/g$.

BET1 may be greater than or equal to about 10 $m^2/g$ and less than or equal to about 300 $m^2/g$, or greater than or equal to about 12 $m^2/g$ and less than or equal to about 100 $m^2/g$.

BET2 may be greater than or equal to about 9 $m^2/g$ and less than or equal to about 300 $m^2/g$, or greater than or equal to about 10 $m^2/g$ and less than or equal to about 100 $m^2/g$.

A specific surface area ratio (BET1/BET2), which is a ratio between BET1 and BET2, may be greater than or equal to about 0.2 and less than or equal to about 5.0, greater than or equal to about 0.5 and less than or equal to about 4.0, or greater than or equal to about 1.0 and less than or equal to about 3.0.

Further, when the composite particles are heated from about 80 °C to about 1400 °C, the amount of $P_2$ gas desorbed from the composite particles is measured by TDS-MS and the amount of desorbed $P_2$ (referred to as MS1) is greater than or equal to about $300 \times 10^{-6}$ mol/g and less than or equal to about $3000 \times 10^{-6}$ mol/g, for example, greater than or equal to about $500 \times 10^{-6}$ mol/g and less than or equal to about $1000 \times 10^{-6}$ mol/g. On the other hand, the amount of desorbed $P_2$ gas (MS1) is an index showing the degree of modification of the composite particles with phosphonic acid.

When the composite particles are heated from about 80 °C to about 1400 °C, the amount of $H_2O$ (referred to as MS2) desorbed from the composite particles measured by TDS-MS may be greater than or equal to about $30 \times 10^{-6}$ mol/g and less than or equal to about $1500 \times 10^{-6}$ mol/g, for example, greater than or equal to about $100 \times 10^{-6}$ mol/g and less than or equal to about $1500 \times 10^{-6}$ mol/g. The amount of desorbed $H_2O$ may be a reference value for the degree of modification of the composite particles, and a ratio of the amount of desorbed (MS1/MS2) may be greater than or equal to about 0.5 and less than or equal to about 5.0, greater than or equal to about 1.0 and less than or equal to about 4.0, or greater than or equal to about 1.5 and less than or equal to about 3.0.

In order to further enhance the endothermic effect of the composite particles, the composite particles may be modified with a functional group such as a $CH_3$ group or a $CH_2OH$ group. The degree of modification by these functional groups may be evaluated by the desorption amount of the following various gases derived from these functional groups in the same way as the degree of modification by phosphonic acid, and the desorption amount of various gases satisfies the following ranges.

The amount of $CH_4$ (referred to as MS3) desorbed from the composite particles when the composite particles are heated from about 80 °C to about 1400 °C measured by TDS-MS may be greater than or equal to about $30 \times 10^{-6}$ mol/g and less than or equal to about $1000 \times 10^{-6}$ mol/g and the amount of desorbed CHsOH (referred to as MS4) measured in the same way may be greater than or equal to about $10 \times 10^{-6}$ mol/g and less than or equal to about $3000 \times 10^{-6}$ mol/g, for example, greater than or equal to about $10 \times 10^{-6}$ mol/g and less than or equal to about $1000 \times 10^{-6}$ mol/g.

MS3 may be greater than or equal to about $50 \times 10^{-6}$ mol/g and less than or equal to about $300 \times 10^{-6}$ mol/g, or greater than or equal to about $60 \times 10^{-6}$ mol/g and less than or equal to about $250 \times 10^{-6}$ mol/g.

MS4 may be greater than or equal to about $20 \times 10^{-6}$ mol/g and less than or equal to about $2000 \times 10^{-6}$ mol/g, or greater than or equal to about $25 \times 10^{-6}$ mol/g and less than or equal to about $1900 \times 10^{-6}$ mol/g.

Further, when the composite particles are modified with a functional group containing a phenyl group, it is easy to disperse the composite particles in a solvent when preparing a slurry such as a positive electrode mixture slurry.

Therefore, the amount of desorbed $C_6H_6$ (referred to as MS5) from about 80 °C to about 1400 °C measured by TDS-MS of the composite particles may be greater than or equal to about $1 \times 10^{-6}$ mol/g and less than or equal to about $4000 \times 10^{-6}$ mol/g, greater than or equal to about $2 \times 10^{-6}$ mol/g and less than or equal to about $2000 \times 10^{-6}$ mol/g, or greater than or equal to about $3 \times 10^{-6}$ mol/g and less than or equal to about $1600 \times 10^{-6}$ mol/g.

A total content of the modifying molecules in the composite particles may be in the range of greater than or equal to about 10 wt% and less than or equal to about 90 wt%, greater than or equal to about 20 wt% and less than or equal to about 80 wt%, or greater than or equal to about 30 wt% and less than or equal to about 70 wt% based on 100 wt% of the composite particles (i.e. based on the total weight of the composite particles).

As for the endothermic property of the composite particles realized by the surface area and the degree of modification by various modifiers as described above, the endothermic amount between about 50 °C to about 250 °C in differential scanning calorimetry is greater than or equal to about 150 J/g and less than or equal to about 500 J/g, for example, greater than or equal to about 170 J/g and less than or equal to about 400 J/g, or greater than or equal to about 180 J/g and less than or equal to about 300 J/g.

Even when the composite particles are included in the positive electrode mixture layer or the negative electrode mixture layer, in order not to decrease the conductivity as much as possible, the volume resistivity of the composite particles when pressurized at about 60 MPa is greater than or equal to about 0.10 Ωcm and less than or equal to about $4 \times 10^4$ Ωcm. The volume resistivity may be greater than or equal to about 0.30 Ωcm and less than or equal to about $3.8 \times 10^4$ Ωcm, or greater than or equal to about 0.50 Ωcm and less than or equal to about $3.6 \times 10^4$ Ωcm.

A content of the composite particles in the positive electrode mixture layer may be in the range of greater than or equal to about 0.1 wt% and less than or equal to about 5.0 wt%, greater than or equal to about 0.2 wt% and less than or equal to about 3.0 wt%, or greater than or equal to about 0.5 wt% and less than or equal to about 2.0 wt% based on the total weight of the positive electrode mixture layer.

The content of the composite particles for the non-aqueous electrolyte rechargeable battery based on the total non-aqueous electrolyte rechargeable battery may be different depending on the use of the non-aqueous electrolyte rechargeable battery and thus is not limited to the following range. However, for example, the content of composite particles for the non-aqueous electrolyte rechargeable battery included in the non-aqueous electrolyte rechargeable battery may be in the range of greater than or equal to about 0.01 wt% and less than or equal to about 5.0 wt%, greater than or equal to about 0.02 wt% and less than or equal to about 2.0 wt%, or greater than or equal to about 0.1 wt% and less than or equal to about 0.5 wt% based on the total weight, 100 wt%, of the non-aqueous electrolyte rechargeable battery.

<3. Manufacturing Method of Non-aqueous Electrolyte Rechargeable Battery According to an Embodiment>

Hereinafter, the manufacturing method of a rechargeable lithium ion battery according to the present embodiment is described.

(3-1. Preparing Method of Composite Particles)

The composite particles for the non-aqueous electrolyte rechargeable battery according to the present embodiment may be produced by preparing first composite particles of metal hydroxide particles and conductive particles and modifying the first composite particles.

The first composite particles are obtained by first mixing and drying a metal oxynitride, which is a raw material of the metal hydroxide particles, and conductive particles while heating to prepare metal hydroxide particles, and at the same time, forming first composite particles of metal hydroxide particles and conductive particles.

The heating temperature may be greater than or equal to about 80 °C and less than or equal to about 200 °C, or greater than or equal to about 120 °C and less than or equal to about 180 °C.

A method of heat-mixing the raw material of the metal hydroxide particles and conductive particles may be a method of using a spray dryer. Since the first composite particles are obtained in a state in which metal hydroxide particles and conductive particles are composited as uniformly as possible by using this spray dryer, a spray dryer may be desirably used for production of the first composite particles.

A method of modifying the first composite particles may be, for example, a method of immersing the first composite particles in a modifying (e.g. treatment) agent for a predetermined period of time, and the like.

Examples of the modifying agent may include phosphoric acid, phosphonic acid (such as phosphonic acid, ethylphosphonic acid, and phenylphosphonic acid), and phosphinic acid (such as phosphinic acid and diphenylphosphinic acid).

The treatment time for modifying the first composite particles may be appropriately changed depending on the type or concentration of the treatment agent, but may be greater than or equal to about 30 minutes and less than or equal to about 48 hours, or greater than or equal to about 1 hour and less than or equal to about 30 hours.

The treatment temperature may also be appropriately selected according to the type and concentration of the treatment agent, but may be greater than or equal to about 30 °C and less than or equal to about 90 °C, or greater than or equal to about 40 °C and less than or equal to about 80 °C.

(3-2. Manufacturing Method of Positive Electrode)

The positive electrode is produced as follows. First, a positive electrode slurry is formed by dispersing a mixture of a positive electrode active material, a conductive agent, a positive electrode binder, and composite particles in a desired ratio in a solvent for a positive electrode slurry. Next, this positive electrode slurry is coated on the positive electrode current collector and dried to form a positive electrode mixture layer. On the other hand, the coating method is not particularly limited. The coating method may include a knife coater method, a gravure coater method, a reverse roll coater method, a slit die coater method, and the like. Each of the following coating processes is also performed by the same method. Subsequently, the positive electrode material mixture layer is pressed by a press to have a desired density. Thus, a positive electrode is manufactured.

(3-3. Manufacturing Method of Negative Electrode)

The negative electrode is also produced in the same way as the positive electrode. First, a negative electrode slurry is prepared by dispersing a mixture of materials constituting the negative electrode mixture layer in a solvent for a negative electrode slurry. Next, a negative electrode mixture layer is formed by coating the negative electrode slurry on the negative current collector and drying it. Next, the negative electrode material mixture layer is pressed by a press machine so as to have a desired density. Thus, a negative electrode is manufactured.

(3-4. Manufacturing Method of Non-aqueous Electrolyte Rechargeable Battery)

Next, an electrode structure is manufactured by placing a separator between the positive electrode and the negative electrode. Then, the electrode structure may be processed into a desired shape (e.g., cylindrical shape, prismatic shape, laminated shape, button shape, etc.) and inserted into a container of the above shape. Subsequently, a non-aqueous electrolyte is inserted into the corresponding container to impregnate the electrolyte into each pore in the separator or a gap between the positive and negative electrodes. Accordingly, a rechargeable lithium ion battery is manufactured.

<4. Effect by the Present Embodiment >

According to the non-aqueous electrolyte rechargeable battery configured as described above, even in an environment where the internal temperature is likely to rise due to battery abnormalities such as internal short circuits, the increase in the internal temperature of the non-aqueous electrolyte rechargeable battery may be sufficiently suppressed, and electrical resistance of the non-aqueous electrolyte rechargeable battery may be suppressed to a small level.

<5. Another Embodiment>

This invention is not limited to the aforementioned embodiment.

In the aforementioned embodiment, the case where the positive electrode includes the composite particles according to the present invention has been described, but the negative electrode may include the composite particles. In the case where the negative electrode includes the composite particles, the same content as in the case where the positive electrode includes the composite particles may be included.

Further, the composite particles may be included in the electrolyte, or may be included in a plurality of locations in the positive electrode, the negative electrode, and the electrolyte.

When the negative electrode includes the composite particles for the non-aqueous electrolyte rechargeable battery, the content of the composite particles for the non-aqueous electrolyte rechargeable battery with respect to the entire negative electrode may be in the same range as that of the positive electrode. When the electrolyte includes the composite particles for a non-aqueous electrolyte rechargeable battery, the content of the composite particles for the non-aqueous electrolyte rechargeable battery is in the range of greater than or equal to about 0.1 wt% and less than or equal to about 10.0 wt% when the total weight of the electrolyte is 100 wt%.

In addition, the present invention is not limited to these embodiments but may be various modified without deviating from the purpose.

[Examples]

Hereinafter, the present invention will be described in more detail according to specific examples. However, the following examples are only one example of the present invention, and the present invention is not limited to the following examples.

[Production of Endothermic Particles]

<Production of Endothermic Particles>

(Example 1 to 4 and Comparative Example 4)

50.0 g of aluminium nitrate nonahydrate and 5.0 g of acetylene black were dispersed in 250 $cm^3$ of ethanol. This dispersion was spray-dried at 150 °C with a spray dryer manufactured by GF Corp., obtaining Composite Particles A' before modification (BET1 : 344 $m^2$/g, BET2 : 1.2 $m^2$/g), in which aluminium hydroxide particles and acetylene black particles were bonded.

(Examples 5 and 7)

50.0 g of aluminium nitrate nonahydrate and 25.0 g of acetylene black were dispersed in 250 $cm^3$ of ethanol. This dispersion was spray dried at 150 °C with a spray dryer manufactured by GF Corp., obtaining Composite Particles B' before modification (BET1 : 344 $m^2$/g, BET2 : 1.2 $m^2$/g), in which aluminium hydroxide particles and acetylene black particles were bonded.

(Example 6)

50.0 g of aluminium nitrate heptahydrate and 1.0 g of acetylene black were dispersed in 250 $cm^3$ of ethanol. This dispersion was spray dried at 150 °C with a spray dryer manufactured by GF Corp., obtaining Composite Particles C' before modification (BET1 : 344 $m^2$/g, BET2 : 1.2 $m^2$/g), in which aluminium hydroxide particles and acetylene black particles were bonded.

<Modification Treatment of Endothermic Particles>

(Example 1)

1.0 g of Composite Particles A' before modification and 3.0 g of phosphoric acid were dispersed in 50 $cm^3$ of a mixed solution of ethanol and purified water (a volume mixing ratio of 1 : 1). This dispersion was heated at 80 °C for 4 hours and vacuum-dried, obtaining modified Composite Particles A.

(Example 2)

Modified Composite Particles B were obtained in the same manner as in Example 1 except that 1.0 g of Composite Particles A' before modification and 3.0 g of ethylphosphonic acid were dispersed in 50 $cm^3$ of a mixed solution of ethanol and purified water (a volume mixing ratio of 1 : 1).

(Example 3)

Modified Composite Particles C were obtained in the same manner as in Example 1 except that 1.0 g of Composite Particles A' before modification and 3.0 g of phenylphosphonic acid were dispersed in 50 cm$^3$ of a mixed solution of ethanol and purified water (a volume mixing ratio of 1 : 1).

(Example 4)

Modified Composite Particles D were obtained in the same manner as in Example 1 except that 1.0 g of Composite Particles A' before modification and 3.0 g of diphenylphosphinic acid were dispersed in 50 cm$^3$ of a mixed solution of ethanol and purified water (a volume mixing ratio of 1 : 1).

(Example 5)

Modified Composite Particles E were obtained in the same manner as in Example 1 except that 1.0 g of Composite Particles B' before modification and 3.0 g of phenylphosphonic acid were dispersed in 50 cm$^3$ of a mixed solution of ethanol and purified water (a volume mixing ratio of 1 : 1).

(Example 6)

Modified Composite Particles F were obtained in the same manner as in Example 1 except that 1.0 g of Composite Particles C' before modification and 5.0 g of phenylphosphonic acid were dispersed in 50 cm$^3$ of a mixed solution of ethanol and purified water (a volume mixing ratio of 1 : 1).

(Comparative Example 6)

Modified Pseudo-boehmite Particles were obtained in the same manner as in Example 1 except that 1.0 g of pseudo-boehmite (BET1 : 407 m$^2$/g, BET2 : 377 m$^2$/g) and 3.0 g of phenylphosphonic acid were dispersed in 50 cm$^3$ of a mixed solution of ethanol and purified water (a volume mixing ratio of 1 : 1).

<Preparation of Mixture of Endothermic Particles and Conductive Particles>

(Comparative Example 7)

10.0 g of modified pseudo-boehmite particles of Comparative Example 6 and 10.0 g of acetylene black were mixed for 10 minutes with a V-type mixer manufactured by Dalton Corp., obtaining Particle Mixture a.

(Comparative Example 8)

20.0 g of modified pseudo-boehmite particles of Comparative Example 6 and 10.0 g of acetylene black were mixed for 10 minutes with a V-type mixer manufactured by Dalton Corp., obtaining Particle Mixture b.

(Comparative Example 9)

10.0 g of modified pseudo-boehmite particles of Comparative Example 6 and 30.0 g of acetylene black were mixed for 10 minutes with a V-type mixer manufactured by Dalton Corp., obtaining Particle Mixture c.

(Comparative Example 10)

10.0 g of pseudo-boehmite particles (BET1 : 407 m$^2$/g, BET2 : 377 m$^2$/g) and 10.0 g of acetylene black were mixed with a V-type mixer manufactured by Dalton Corp. for 10 minutes, obtaining Particle Mixture d.

[Manufacture of Positive Electrode]

(Examples 1 to 6 and Comparative Examples 2 to 10)

LiCoO$_2$, acetylene black, polyvinylidene fluoride, and endothermic particles were mixed and dispersed in an N-methyl-2-pyrrolidone solvent at a weight ratio of 97.0:1.0:1.3:0.7 as dry powders, respectively, to prepare a positive electrode mixture slurry. Subsequently, the slurry was coated on one surface of the aluminium current collector foil to have a coating amount of the mixture (surface density) of 20.0 mg/cm$^2$ per one surface after drying, and then dried, and then pressed with a roll press machine to have a mixture layer density of 4.15 g/cc, manufacturing each positive electrode.

(Comparative Example 1 and Example 7)

Each positive electrode was manufactured in the same manner as in Example 1 except that the positive electrode mixture slurry was prepared by mixing and dispersing LiCoO$_2$, acetylene black, and polyvinylidene fluoride in an N-methyl-2-pyrrolidone solvent at a weight ratio of 97.7 : 1.0 : 1.3 as dry powders, respectively.

[Manufacture of Negative Electrode]

(Examples 1 to 6 and Comparative Examples 1 to 10)

Artificial graphite, a carboxylmethyl cellulose (CMC) sodium salt, and a styrene butadiene-based aqueous dispersed body as dry powders in a weight ratio of 97.5 : 1.0 : 1.5 were dissolved and dispersed in a water solvent, preparing negative electrode mixture slurry. Subsequently, the negative electrode mixture slurry was coated and dried on one surface of a copper foil to have a coating amount of the mixture (surface density) of 10.5 mg/cm$^2$ per one surface, then dried, and then, pressed with a roll press to have the mixture layer density of 1.65 g/cc, manufacturing a negative electrode.

(Example 7)

A negative electrode was manufactured in the same manner as in Example 1 except that the negative electrode mixture slurry was prepared by dissolving and dispersing artificial graphite, a carboxylmethyl cellulose (CMC) sodium salt, a styrene butadiene-based aqueous dispersed body, and the composite particles E of Example 5 as dry powders in a weight ratio of 96.5 : 1.0 : 1.5 : 1.0 in a water solvent.

[Manufacture of Rechargeable Battery Cells]

(Examples 1 to 7 and Comparative Examples 1 to 10)

A plurality of the positive electrodes and a plurality of the negative electrodes were stacked with a polypropylene porous separator between the positive and negative electrodes to have battery design capacity of 300 mAh, manufacturing an electrode stack. Subsequently, a rechargeable battery cell before the initial charge was manufactured by welding nickel and aluminium lead wires respectively to the negative and positive electrodes of the electrode stack, housing the electrode stack in an aluminium laminate film with the lead wires externally pulled out, injecting an electrolyte thereinto, and sealing the aluminium laminate film under a reduced pressure. The electrolyte was prepared by dissolving 1.3 M LiPF$_6$ and 1 wt% of vinylene carbonate in a mixed solvent of ethylene carbonate / dimethyl carbonate / fluoroethylene carbonate in a volume ratio of 15 / 80 / 5.

[Evaluation of Endothermic Particles]

The endothermic particles used in examples and comparative examples were evaluated as follows.

<(Specific Surface Area (BET) of Endothermic Particles>

The specific surface area (BET (BET 1 or BET2) calculated based on the adsorption isotherm measured by adsorbing water vapor or nitrogen) of the inorganic particles or composite particles was measured using a gas adsorption amount measuring device (BELSORP manufactured by Microtrac Bell), according to JIS K6217-2.

<Mass of Desorbed Gas>

Thermal desorption gas mass spectrometry (TDS-MS) was conducted by using a thermal desorption gas mass spectrometer (TDS-1200, ESCO, Ltd.) to measure and analyze each desorbed amount of methane molecules, methanol molecules, benzene molecules, diphosphorus molecules, and water molecules, as follows.
In TDS, the inorganic particles or composite particles were set by using a sample stage made of quartz and a sample dish made of SiC. In addition, the temperature increase rate was 60 °C/min. The temperature increase was controlled by monitoring a temperature on the sample surface. Furthermore, a weight of the sample was 1 mg, which was corrected by an actual weight. A quadruple mass spectrometer was used for a detection, and a voltage applied thereto was 1000 V.

TDS was used to measure an amount ($\mu$mol/g) of each gas desorbed from the inorganic particles or composite particles during the temperature increase from 80 °C to 1400° C. The mass number [M/z] used for analyzing the measurements was 15 for $CH_4$, 18 for $H_2O$, 31 for CHsOH, 62 for $P_2$, and 78 for $C_6H_6$, wherein gases corresponding to the mass numbers were all each of the aforementioned substances. Herein, regarding the gas amount of $H_2O$, an integrated value only from 80 °C to 200 °C out of the entire temperature range was used to obtain the desorbed $H_2O$ amount (MS2).

<Maximum Endothermic Peak Temperature>

The maximum endothermic peak temperature of the endothermic particles was measured by increasing a temperature at a heating rate of 5 K/min using a differential scanning calorimetry device (manufactured by Hitachi High-Tech Science Co., Ltd.) according to JIS K7121, and confirming a peak of the endothermic decomposition temperature.

<Confirmation of Heat Generation at 150 °C or less under Coexistence of Endothermic Particles and Electrolyte>

After putting 2.0 mg of the endothermic particles and 0.5 mg of the same electrolyte as used to manufacture the rechargeable battery cells into a dedicated airtight container and caulking it, whether or not an exothermic peak was found at 150 °C or less was examined by checking an endothermic peak in the same method as described. As a result, in Comparative Examples 6 to 9, a clear exothermic peak was observed around 100°C, but in Examples 1 to 7, this exothermic peak was not observed.

<Volume density and Volume Resistance of Powder when Pressurized at 60 MPa>

Using MCP-PD51, Nitto Seiko Analytech Co., Ltd., the volume density and the volume resistivity of the pressurized powder were measured when the endothermic particles filled in the cylindrical cylinder were made into powder pressed by a hydraulic press. Measurement conditions are as follows.

Load: 18.85 kN
Electrode gap: 3.0 mm
Electrode radius: 0.7 mm
Sample radius: 10.0 mm
Probe used: 4 probes

<Raman spectroscopic analysis>

Each endothermic particle was measured at an excitation wavelength of 532.36 nm using NRS-5100, Nippon Spectroscopy Co., Ltd. as a microscopic laser Raman spectrometer. Measurement conditions are as follows.

Exposure time: 10 seconds
Cumulative times: 20 times
Diffraction lattice: 300/mm (600 nm)
Of the Raman spectra of the entire measured area, curve fitting was performed on the spectrum from 800 cm$^{-1}$ to 3500 cm$^{-1}$ to obtain a ratio ($A_D$ / $A_G$) of the peak area ($A_D$) around 1350 cm$^{-1}$ to the peak area ($A_G$) around 1580 cm$^{-1}$, and a peak full width at half maximum (G'-FWHM) around 2680 cm$^{-1}$.

[Evaluation of Rechargeable Battery Cells]

< Cell Resistance >

The fully charged initial cell resistance was measured by electrochemical impedance spectroscopy (EIS, VMP-3Potentiostat) at 25°C. As a measurement condition, the frequency range was 100 kHz to 100 mHz, and the applied voltage was 10 mV. The diameter of the semicircular arc of the Nyquist plot obtained from the measurement results was used as the cell resistance.

< Cycle Characteristics >

The rechargeable battery cells according to Examples 1 to 7 and Comparative Examples 1 to 10 were charged under a constant current to 4.3 V at 0.1 CA of design capacity and charged under a constant voltage to 0.05 CA still at 4.3 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.3 V and a discharge cut-off voltage of 3.0 V in the 25 °C thermostat. The rechargeable battery cells were 100 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 100 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 100 cycles.

< Heating Test >

The rechargeable battery cells according to Examples 1 to 7 and Comparative Examples 1 to 10 were charged under a constant current to 4.42 V at design capacity of 0.1 CA and charged under a constant voltage at 4.42 V to 0.05 CA in the 25 °C thermostat. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.42 V and a discharge cut-off voltage of 3.0 V as 1 cycle, the cells were charged again under a constant current/constant voltage- to 4.42 V, which were regarded as initial cells. These rechargeable battery cells were left for 1 hour in a thermostat heated to 165 °C, and a case where a voltage of a battery cell became 4.3 V or less was regarded as "abnormal occurrence", and an abnormal occurrence rate was evaluated in the 10 battery tests.

<Nail Penetration Test>

A nail penetration test was conducted by penetrating the aforementioned initial cells in the center with a nail (stainless steel or soft iron) having a diameter of 3 mm at 50 mm/s. A case where an external temperature of a battery cell reached 50 °C or higher 5 seconds after penetrated with the nail was regarded as "abnormal occurrence," and an abnormal occurrence rate was evaluated in the 10 battery tests.

< Overcharge Test >

A case where an external temperature of a battery cell reached 50 °C or higher after additionally charging the aforementioned initial cells under a constant current to 12 V at 3 CA and then, charging them under a constant voltage for 10 minutes after reaching 12 V was regarded as "abnormal occurrence," an abnormal occurrence rate was evaluated in the 10 battery tests.

<Evaluation Results>

Table 1 shows types, physical properties, and locations of the inorganic particles or endothermic particles used in the examples and the comparative examples described above. In addition, the evaluation results of the rechargeable battery cells according to Examples 1 to 7 and Comparative Examples 1 to 10 are shown in Table 2.

(Table 1)

| | Endothermic particle | Volume resistivity (Ω cm) | 50 to 250°C endothermic amount (J/g) | Thermal desorption gas mass | | | | | | Specific surface area | | | Raman spectroscopy | | Location including endothermic particles |
| | | | | MS1 (μmol/g) | MS2 (μmol/g) | Desorption gas amount ratio (-) | MS3 (μmol/g) | MS4 (μmol/g) | MS5 (μmol/g) | BET1 (m²/g) | BET2 (m²/g) | specific surface area ratio (-) | $A_D$/AG | G'-FWHM cm-1 | |
|---|---|---|---|---|---|---|---|---|---|---|---|---|---|---|---|
| Ex. 1 | composite particle A | 152 | 250 | 754.2 | 281.1 | 2.7 | 62.1 | 26.1 | 3.5 | 59.8 | 51.2 | 1.2 | 1.2 | 82 | positive electrode |
| Ex. 2 | composite particle B | 117 | 252 | 695.0 | 275.2 | 2.5 | 2350 | 1824.0 | 3.7 | 68.5 | 53.5 | 1.3 | 1.2 | 83 | positive electrode |
| Ex. 3 | composite particle C | 103 | 255 | 709.4 | 2708 | 2.6 | 120.2 | 1143.8 | 752.5 | 72.8 | 32.5 | 2.2 | 1.2 | 82 | positive electrode |
| Ex. 4 | composite particle D | 112 | 234 | 685.2 | 286.4 | 2.4 | 115.2 | 1121.4 | 1580.2 | 58.2 | 39.5 | 1.5 | 1.2 | 82 | positive electrode |
| Ex. 5 | composite particle E | 0.5 | 185 | 512.6 | 2306 | 2.2 | 81.7 | 8343 | 510.3 | 65.3 | 51 | 1.3 | 1.2 | 82 | positive electrode |
| Ex. 6 | composite particle F | 35025 | 260 | 964.2 | 6353 | 1.5 | 182.6 | 1453.8 | 1286.7 | 68.2 | 38.4 | 1.8 | 1.2 | 82 | positive electrode |
| Ex. 7 | composite particle E | 0.5 | 185 | 512.6 | 2306 | 2.2 | 81.7 | 8343 | 510.3 | 65.3 | 51 | 1.3 | 1.2 | 82 | negative electrode |
| Comp. Ex. 1 | endothermic particles were not added | | | | | | | | | | | | | | |
| Comp. Ex. 2 | acetylene black | 0.02 | 0 | 0.0 | 5.1 | 0.0 | 3.0 | 0.7 | 0.1 | 0.0 | 64.4 | 0.0 | 1.1 | 75 | positive electrode |
| Comp. Ex. 3 | aluminium hydroxide particle | $1 \times 10^{14}$ | 0 | 0.0 | 8.2 | 0.0 | 1.5 | 0.1 | 0.0 | 3.3 | 3.2 | 1.0 | 0.0 | 0 | positive electrode |
| Comp. Ex. 4 | composite particle A' before modification | 0.5 | 650 | 1.2 | 1531.9 | 0.0 | 60.9 | 24.5 | 3.1 | 344.0 | 1.2 | 286.7 | 1.2 | 80 | positive electrode |

(Table 1)

| | Endothermic particle | Volume resistivity (Ω cm) | 50 to 250°C endothermic amount (J/g) | Thermal desorption gas mass | | | | | | Specific surface area | | | Raman spectroscopy | | Location including endothermic particles |
|---|---|---|---|---|---|---|---|---|---|---|---|---|---|---|---|
| | | | | MS1 (μmol/g) | MS2 (μmol/g) | Desorption gas amount ratio (-) | MS3 (μmol/g) | MS4 (μmol/g) | MS5 (μmol/g) | BET1 (m²/g) | BET2 (m²/g) | specific surface area ratio (-) | $A_D$/AG | G'-FWHM cm-1 | |
| Comp. Ex. 5 | pseudo-boehmite particle | $1 \times 10^{14}$ | 800 | 0.0 | 1885.4 | 0.0 | 9.4 | 2.5 | 0.2 | 407.0 | 377.0 | 1.1 | 0.0 | 0 | positive electrode |
| Comp. Ex. 6 | modified pseudo-boehmite particle | $3 \times 10^{14}$ | 250 | 986.6 | 7338 | 1.3 | 208.8 | 160.9 | 1473.4 | 66.1 | 50.7 | 1.3 | 0.0 | 0 | positive electrode |
| Comp. Ex. 7 | particle mixture a | $5 \times 10^7$ | 125 | 493.3 | 369.4 | 1.3 | 1059 | 8008 | 736.8 | 33.1 | 57.6 | 0.6 | 1.1 | 83 | positive electrode |
| Comp. Ex. 8 | particle mixture b | $2 \times 10^{10}$ | 167 | 657.7 | 4892 | 1.3 | 139.2 | 1067.3 | 982.3 | 44.1 | 55.3 | 0.8 | 1.1 | 85 | positive electrode |
| Comp. Ex. 9 | particle mixture c | $6 \times 10^3$ | 65 | 246.6 | 183.4 | 1.3 | 52.2 | 400.2 | 368.4 | 16.5 | 142.6 | 0.1 | 1.1 | 85 | positive electrode |
| Comp. Ex. 10 | particle mixture d | $5 \times 10^6$ | 400 | 0.0 | 9427 | 0.0 | 4.7 | 1.3 | 0.1 | 203.5 | 190.1 | 1.1 | 1.1 | 80 | positive electrode |

(Table 2)

| | Heat Generation at 150 °C or less under coexistence of endothermic particles and electrolyte | Cell resistance (Ω) | Discharge capacity retention after 100 cycles (%) | Abnormal occurrence rate in heating test (%) | Abnormal occurrence rate in nail penetration test (%) | Abnormal occurrence rate in overcharge test (%) |
|---|---|---|---|---|---|---|
| Ex. 1 | None | 1.5 | 90.2 | 0 | 10 | 10 |
| Ex. 2 | None | 1.5 | 90.1 | 0 | 20 | 0 |
| Ex. 3 | None | 1.4 | 90.3 | 0 | 20 | 0 |
| Ex. 4 | None | 1.5 | 90.1 | 0 | 20 | 0 |
| Ex. 5 | None | 1.3 | 90.2 | 0 | 20 | 0 |
| Ex. 6 | None | 1.5 | 90.1 | 0 | 20 | 0 |
| Ex. 7 | None | 1.4 | 90.1 | 0 | 20 | 0 |
| Comp. Ex. 1 | - | 1.5 | 90.2 | 100 | 100 | 100 |
| Comp. Ex. 2 | Yes | 1.4 | 90.4 | 100 | 100 | 100 |
| Comp. Ex. 3 | Yes | 1.9 | 86.5 | 80 | 80 | 80 |
| Comp. Ex. 4 | Yes | 1.5 | 90.2 | 90 | 100 | 100 |
| Comp. Ex. 5 | Yes | 1.9 | 86.3 | 80 | 80 | 80 |
| Comp. Ex. 6 | None | 1.9 | 90.0 | 0 | 20 | 0 |
| Comp. Ex. 7 | None | 1.7 | 90.1 | 50 | 60 | 50 |
| Comp. Ex. 8 | None | 1.8 | 90.0 | 40 | 50 | 40 |
| Comp. Ex. 9 | None | 1.5 | 90.2 | 80 | 80 | 80 |
| Comp. Ex. 10 | Yes | 1.7 | 88.7 | 90 | 90 | 100 |

<Consideration of Examples and Comparative Examples>

Referring to the results of Table 2, in Examples 1 to 7, compared with Comparative Examples 1 to 10, even under conditions of easily increasing an internal battery temperature such as an external impact by nailing, overcharging, or the like, an abnormal occurrence rate due to an internal battery temperature increase was suppressed sufficiently to a small level. Referring to these results, the composite particles, which are the endothermic particles according to the present invention, turned out to suppress an internal temperature of the non-aqueous electrolyte rechargeable battery cells including the same sufficiently to a low level.

In addition, Examples 1 to 7 included the composite particles according to the present invention in a positive or negative electrode but exhibited cell resistance of 1.5 Ω or less, which is equivalent to or less than that of Comparative Example 1 including no composite particles.

Furthermore, referring to the results of each example, even when a type or an amount of a raw material used for modification, was changed, or when a location where the composite particles were contained was changed, the same effect was exerted.

On the other hand, in Comparative Example 2 containing the acetylene black particles alone, the cell resistance was reduced, but there was no effect of lowering the abnormal occurrence rate.

In Comparative Example 3 or 5 using non-modified metal hydroxide, the abnormal occurrence rate was not sufficiently suppressed, and in addition, the cell resistance also was increased.

In addition, in Comparative Example 4 using non-modified composite particles, the cell resistance was suppressed to a low level, but the abnormal occurrence rate was increased, which shows that a modification degree of the composite particles through a modification treatment was important.

Furthermore, in Comparative Example 6 using pseudo-boehmite having a modification degree within an optimal range through a modification treatment, the abnormal occurrence rate was suppressed to a low level, but the cell resistance was increased.

In Comparative Examples 7 to 10 using a particle mixture of modified metal hydroxide particles and conductive particles, effects of reducing both of the cell resistance and the abnormal occurrence rate were inferior to those of, Examples 1 to 7. Therefore, the metal hydroxide particles and the conductive particles were not only simply mixed but also used as composite particles in which the particles themselves are bonded each other, which brings about an effect of the present invention of sufficiently suppressing an increase in the cell resistance and simultaneously, an increase in the internal battery temperature.

In present disclosure, the average particle diameter (or size) may be measured by a method well suitable to those skilled in the art, for example, may be measured by a particle size analyzer, for example, HORIBA, LA-950 laser particle size analyzer, or may be measured by a transmission electron microscope (TEM) or a scanning electron microscope (SEM). In some embodiments, it is possible to obtain an average particle diameter value by measuring it utilizing a dynamic light scattering method, performing data analysis, counting the number of particles for each particle size range, and calculating from the data. In some embodiments, the average particle diameter (or size) may be measured by a microscope or a particle size analyzer and may refer to a diameter (D50) of particles having a cumulative volume of 50 volume% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Also, in the present disclosure, when particles are spherical, "diameter" indicates a particle diameter or an average particle diameter, and when the particles are non-spherical, the "diameter" indicates a major axis length or an average major axis length.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1. Composite particles for a non-aqueous electrolyte rechargeable battery, comprising metal hydroxide particles and conductive particles,

    wherein a volume resistivity at the time of about 60 MPa pressurization is greater than or equal to about 0.10 $\Omega$cm and less than or equal to about $4 \times 10^4$ $\Omega$cm,
    an endothermic amount between about 50 °C to about 250 °C in differential scanning calorimetry is greater than or equal to about 150 J/g and less than or equal to about 500 J/g, and
    an amount of desorbed $P_2$ (MS1) from about 80 °C to about 1400 °C by thermal desorption gas mass spectrometry (TDS-MS) is greater than or equal to about $300 \times 10^{-6}$ mol/g and less than or equal to about $3000 \times 10^{-6}$ mol/g.

2. The composite particles of claim 1, wherein
    an amount of desorbed $H_2O$ (MS2) of the composite particles from about 80 °C to about 200 °C as determined by a thermal desorption gas mass spectrometry (TDS-MS) is greater than or equal to about $30 \times 10^{-6}$ mol/g and less than or equal to about $1500 \times 10^{-6}$ mol/g, and a desorption gas amount ratio (MS1/MS2) satisfies Formula (1):

$$0.5 \le (MS1 / MS2) \le 5.0 \qquad (1).$$

3. The composite particles of claim 1 or claim 2, wherein

    a ratio ($A_D$ / $A_G$) of a peak area ($A_D$) around 1350 cm$^{-1}$ and a peak area ($A_G$) around 1580 cm$^{-1}$ measured by Raman spectroscopy of the composite particles is greater than or equal to about 0.5 and less than or equal to about 3.5, and
a peak full width at half maximum (G'-FWHM) around 2680 cm$^{-1}$ measured by Raman spectroscopy is greater than or equal to about 60 cm$^{-1}$ and less than or equal to about 150 cm$^{-1}$.

4. The composite particles of any one of claims 1 to 3, wherein

   a specific surface area (BET1) of the composite particles calculated based on the adsorption isotherm measured by adsorbing water vapor is greater than or equal to about 8 m$^2$/g and less than or equal to about 600 m$^2$/g, and
   a specific surface area (BET2) of the composite particles calculated based on the adsorption isotherm measured by adsorbing nitrogen is greater than or equal to about 8 m$^2$/g and less than or equal to about 600 m$^2$/g.

5. The composite particles of claim 4, wherein
   a specific surface area ratio (BET1/BET2) satisfies Formula (2):

$$0.2 \leq (BET1 / BET2) \leq 5.0 \qquad (2).$$

6. The composite particles of any one of claims 1 to 5, wherein

   an amount of desorbed CH$_4$ (MS3) of the composite particles from about 80 °C to about 1400 °C by thermal desorption gas mass spectrometry (TDS-MS) is greater than or equal to about $30 \times 10^{-6}$ mol/g and less than or equal to about $1000 \times 10^{-6}$ mol/g, and
   an amount of desorbed CHsOH (MS4) of the composite particles from about 80 °C to about 1400 °C by TDS-MS is greater than or equal to about $10 \times 10^{-6}$ mol/g and less than or equal to about $3000 \times 10^{-6}$ mol/g.

7. The composite particles of any one of claims 1 to 6, wherein
   an amount of desorbed C$_6$H$_6$ (MS5) of the composite particles from about 80 °C to about 1400 °C by TDS-MS is greater than or equal to about $1 \times 10^{-6}$ mol/g and less than or equal to about $4000 \times 10^{-6}$ mol/g.

8. The composite particles of any one of claims 1 to 7, wherein
   the metal hydroxide is at least one selected from aluminium hydroxide, pseudo-boehmite, boehmite, alumina, and kaolinite.

9. A positive electrode for a non-aqueous electrolyte rechargeable battery, comprising
   the composite particles for a non-aqueous electrolyte rechargeable battery of any one of claims 1 to 8 in a range of greater than or equal to about 0.1 wt% and less than or equal to about 5.0 wt% based on a total weight, 100 wt%, of the positive electrode mixture layer.

10. A negative electrode for a non-aqueous electrolyte rechargeable battery, comprising
    the composite particles for a non-aqueous electrolyte rechargeable battery of any one of claims 1 to 8 in a range of greater than or equal to about 0.1 wt% and less than or equal to about 5.0 wt% based on a total weight, 100 wt%, of the negative electrode mixture layer.

11. A non-aqueous electrolyte rechargeable battery, comprising

    a positive electrode, a negative electrode, a separator, and a non-aqueous electrolyte,
    wherein the positive electrode is the positive electrode for the non-aqueous electrolyte rechargeable battery of claim 9.

12. A non-aqueous electrolyte rechargeable battery, comprising

    a positive electrode, a negative electrode, a separator, and a non-aqueous electrolyte,
    wherein the negative electrode is the negative electrode for the non-aqueous electrolyte rechargeable battery of claim 10.

13. A method for producing composite particles for a non-aqueous electrolyte rechargeable battery, comprising

    mixing a raw material of metal hydroxide particles and conductive particles while heating to form first composite particles of the metal hydroxide particles and the conductive particles, and
modifying the first composite particles using a treatment agent.

14. The method of claim 13, wherein
the treatment agent includes at least one of phosphoric acid, phosphonic acid, and phosphinic acid.

15. The method of claim 13 or claim 14, wherein
the raw material for the metal hydroxide particles and the conductive particles are mixed by spray-drying while heating.

# FIG. 1

FIG. 2

Metal hydroxide particles

Conductive particles

Europäisches
Patentamt

European
Patent Office

Office européen
des brevets

# EUROPEAN SEARCH REPORT

**Application Number**

EP 23 16 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/288761 A1 (PARK HONG-KYU [KR] ET AL) 15 November 2012 (2012-11-15) * examples 1,3,10 * | 1-12 | INV. H01M4/131 H01M4/62 H01M10/052 |
| X | CN 106 046 632 A (QINGDAO HILYWILL ADVANCED MAT TECH CO LTD) 26 October 2016 (2016-10-26) | 13,15 | H01M10/42 H01M10/613 H01M10/654 |
| A | * paragraphs [0008] - [0011] * | 14 | H01M10/659 |

TECHNICAL FIELDS
SEARCHED        (IPC)

H01M

The present search report has been drawn up for all claims

| Place of search | Date of completion of the search | Examiner |
|---|---|---|
| Munich | 29 August 2023 | Meini, Stefano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 5834

29-08-2023

| Patent document cited in search report | | Publication date | Patent family member(s) | | Publication date |
|---|---|---|---|---|---|
| US 2012288761 | A1 | 15-11-2012 | CN | 1918731 A | 21-02-2007 |
| | | | EP | 1711971 A1 | 18-10-2006 |
| | | | JP | 5132941 B2 | 30-01-2013 |
| | | | JP | 2007522619 A | 09-08-2007 |
| | | | KR | 20050079899 A | 11-08-2005 |
| | | | TW | I269477 B | 21-12-2006 |
| | | | US | 2005208380 A1 | 22-09-2005 |
| | | | US | 2012288761 A1 | 15-11-2012 |
| | | | WO | 2005076391 A1 | 18-08-2005 |
| CN 106046632 | A | 26-10-2016 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6925368 B
- JP 2016162528 A
- JP 4364940 B